# DEMANDE DE BREVET EUROPEEN

(11) **EP 2 552 063 A2**
(43) Date de publication de la demande: **30.01.2013**
(21) Numéro de dépôt: 12178226.2
(22) Date de dépôt: 27.07.2012
(51) Int. Cl.: H04L 12/58, G06Q 10/00

(54) **Procédé d'appariement de données et utilisation à la vérification d'identité d'un destinataire d'un courrier**

(30) Priorité: 27.07.2011 FR 1156842
(71) Demandeur: LA POSTE, 75757 Paris Cedex 15 (FR)
(72) Inventeur: Pham, Minh-Viet, 75016 Paris (FR); Michelot, Vincent, 78720 Dampierre-en-Yvelines (FR); Delbecq, Cécile, 78420 Carrières-sur-Seine (FR); Lamaury, Thibault, 92100 Boulogne-Billancourt (FR); Ducarne, Benoit, 78370 Plaisir (FR)
(74) Mandataire: Bethenod, Marc

(57) **Abrégé**

Procédé d'appariement de données d'identification comprenant :
• acquisition d'un enregistrement de données comprenant une pluralité de champs ;
• sélection d'enregistrements appariés stockés dans une base de données, les enregistrements de données ayant des champs de type correspondant aux champs de l'enregistrement acquis, la sélection comprenant pour chaque enregistrement de la base de données :
• comparaison d'au moins un champ avec le champ correspondant de l'enregistrement acquis, la comparaison définissant une métrique discrète à au moins trois états dont un premier état correspond à une identité ;
• recherche de l'appariement par parcours d'un automate fini dans lequel chaque transition correspond à au moins un état de la métrique de comparaison d'au moins un champ, l'automate fini ayant au moins deux états finaux : apparié et non apparié.

## Description

La présente invention concerne de manière générale l'appariement automatique de données d'identification

De manière particulière, la présente invention vise à proposer un procédé d'appariement de données et son utilisation à la vérification d'identité destiné à être mis en oeuvre dans le cadre d'un service d'envoi de lettre recommandée électronique.

Le développement d'un service de lettre recommandée électronique a fait naître un besoin nouveau concernant la vérification de l'identité d'un destinataire. Il est apparu nécessaire de prévoir un procédé de vérification d'une telle identité au moment de l'envoi de la lettre.

Or l'utilisation d'un procédé automatique de gestion d'un tel service implique des problématiques nouvelles de recherche et de validation automatique du ou des destinataires d'une telle lettre recommandée électronique, en particulier quand les champs d'identification remplis par l'expéditeur ne coïncident pas parfaitement avec les champs d'identification contenus dans les bases de données en relation avec le ou les destinataires.

Il apparait ainsi nécessaire de résoudre le problème d'appariement de données même quand celles-ci ne sont pas parfaitement identiques.

Ainsi, l'invention concerne un procédé d'appariement de données d'identification comprenant :
- acquisition d'un enregistrement de données comprenant une pluralité de champs ;
- sélection d'enregistrements appariés stockés dans une base de données, les enregistrements de données ayant des champs de type correspondant aux champs de l'enregistrement acquis, la sélection comprenant pour chaque enregistrement de la base de données :
   - comparaison d'au moins un champ avec le champ correspondant de l'enregistrement acquis, la comparaison définissant une métrique discrète à au moins trois états dont un premier état correspond à une identité ;
   - recherche de l'appariement par parcours d'un automate fini dans lequel chaque transition correspond à au moins un état de la métrique de comparaison d'au moins un champ, l'automate fini ayant au moins deux états finaux : apparié et non apparié.

Ainsi, dans un procédé selon l'invention, on compare des données concernant l'identité d'un destinataire avec des données préenregistrées, afin de déterminer si le destinataire dispose d'une identité numérique enregistrée dans une base de données. Une identité numérique peut consister en une identité numérique vérifiée IDN de La Poste pouvant être utilisée dans le cadre du service de lettre recommandée électronique, mais peut également consister en une identité numérique fournie par un autre prestataire, enregistrée dans une base de données externe.

A l'issue de la mise en oeuvre du procédé, il est ainsi déterminé si le destinataire éventuel d'une lettre recommandée électronique dispose, ou non, d'une identité numérique. Dans le cas où le destinataire possède une telle identité, l'utilisateur du service de lettre recommandée électronique, également appelé expéditeur, est informé de ce résultat positif, et peut ainsi poursuivre l'envoi de la lettre recommandée électronique.

Avantageusement, l'utilisation d'une matrice de décision pour décider de l'appariement permet de déterminer un appariement même si tous les champs ne sont pas parfaitement identiques entre les données fournies par l'expéditeur et celles contenues dans la base de données.

En revanche, dans le cas où le destinataire ne possède pas d'identité numérique, l'expéditeur peut se voir proposer plusieurs choix pour poursuivre son envoi, selon les différents modes de réalisation du service. Ainsi, dans un exemple, l'expéditeur pourra choisir de passer sur un envoi de lettre recommandée classique ou par une lettre recommandée électronique suivie d'une impression papier, ou pourra choisir de procéder à l'envoi tout électronique malgré le résultat négatif du procédé de vérification d'identité numérique du destinataire.

Il est à noter que, dans ce qui précède, le terme «nom du destinataire» peut recouvrir l'ensemble des éléments composant l'identité d'une personne physique, par exemple sa civilité, son nom et son prénom, ou encore la raison sociale d'une personne morale.

En outre, le terme «adresse physique» correspond, par exemple, à une adresse postale ou une adresse géographique.

Dans le cadre de la mise en oeuvre du procédé, il est possible que la recherche d'une identité numérique soit effectuée dans une pluralité de bases de données, pouvant conduire à de multiples résultats positifs à l'issue des comparaisons.

Ainsi, dans des réalisations particulières de l'invention pouvant être mise en oeuvre seules ou en combinaison :
- il comprend en outre, lorsque plusieurs enregistrements stockés sont définis comme appariés, la vérification que le résultat de la comparaison d'un champ prédéterminé est le premier état ;
- la métrique discrète comprend 3 états : outre le premier état correspondant à une identité, un deuxième état correspondant à une différence mineure et un troisième état correspondant à une différence majeure ;
- les enregistrements comprennent les champs suivants : un premier paramètre d'identification correspondant à une adresse électronique de la personne, un deuxième paramètre d'identification correspondant au nom de la personne et un troisième paramètre correspondant à une adresse physique de la personne ;
- lorsque le résultat de la recherche d'appariement correspond à :
   - un unique enregistrement, détermination que l'appariement est positif ;
   - aucun enregistrement, détermination que l'appariement est négatif ;
   - une pluralité d'enregistrement, détermination que l'appariement est positif si ces enregistrements comprennent une adresse électronique identique ;
- les valeurs de la métrique sont comprises
   - pour le premier paramètre d'identification, dans le groupe comprenant : premier et deuxième états,
   - pour le deuxième paramètre, dans le groupe comprenant : premier, deuxième et troisième états,
   - pour le troisième paramètre, dans le groupe comprenant premier et troisième états ;
- lorsqu'un premier paramètre a été fourni, automate fini comprend les étapes suivantes :
   - lorsque l'état de la métrique du premier paramètre avec le paramètre correspondant de l'enregistrement est le premier état
      - si l'état de la métrique du deuxième paramètre avec le paramètre correspondant de l'enregistrement est le premier état, détermination que l'enregistrement correspond à la personne,
      - si l'état de la métrique du deuxième paramètre est le deuxième état, détermination que l'enregistrement correspond au à la personne,
      - si l'état de la métrique du deuxième paramètre est le troisième état, détermination que l'enregistrement ne correspond pas à la personne.
   - lorsque l'état de la métrique du premier paramètre est le troisième état, détermination que l'enregistrement ne correspond pas à la personne ;
- lorsqu'un premier paramètre n'a pas été fourni, l'algorithme de décision comprend les étapes suivantes :
   - détermination qu'un enregistrement de la base de données correspond à la personne dans les deux cas suivants : un premier ou deuxième état pour le deuxième paramètre et un premier état pour le troisième paramètre,
   - détermination qu'aucun enregistrement ne correspond dans tous les autres cas ;
- comprenant l'étape, avant l'étape de comparaison, de normalisation des données acquises selon un format prédéterminé ;

Selon un second objet de l'invention, un procédé de vérification de l'identité d'un destinataire d'un courrier recommandé électronique comprend un sous-procédé d'appariement comme décrit ci-dessus des données décrivant le destinataire du courrier.

Dans un mode particulier de réalisation, l'appariement est réalisé avec les enregistrements d'une base de données de destinataires, les enregistrements ayant été préalablement validés comme des valeurs d'authentification, de sorte à déterminer si les données décrivant le destinataire correspondent, ou non, à un destinataire authentifié.

D'autres avantages et particularités de la présente invention résulteront de la description qui va suivre, donnée à titre d'exemple non limitatif et faite en référence à
- la figure 1 est un schéma d'un système permettant de réaliser un appariement selon un mode de réalisation de l'invention ;
- la figure 2 est un ordinogramme du procédé d'appariement selon un mode de réalisation de l'invention ; et
- la figure 3 est un exemple d'architecture permettant la mise en oeuvre d'un procédé selon un second mode de réalisation de l'invention.

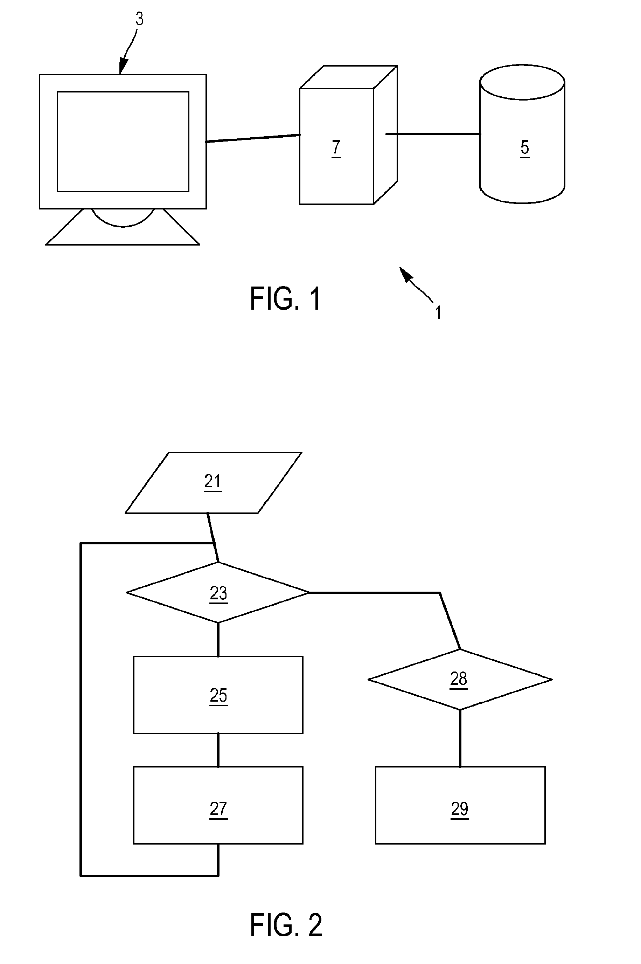

En référence à la figure 1, un système d'appariement 1 comprend un dispositif 3 d'acquisition d'un enregistrement comportant plusieurs champs, ces termes étant utilisés dans leur sens habituel en référence aux bases de données relationnelles.

Par ailleurs, une base de données 5 comprend une pluralité d'enregistrements comprenant les mêmes types de champs. Ainsi typiquement, les enregistrements seront rangés dans une table de la base de données 5.

Le dispositif d'acquisition 3 et la base de données 5 sont connectés à un dispositif d'appariement 7, typiquement une unité logique et arithmétique de calcul ou un calculateur.

Le fonctionnement du dispositif d'appariement 1 est maintenant explicité en relation avec la figure 2.

Par l'intermédiaire du dispositif d'acquisition 3, un enregistrement de données comprenant une pluralité de champs est saisi, étape 21, pour être comparé aux enregistrements de la base de données et détecter les enregistrements identiques ou presque identiques.

Comme déjà indiqué, l'enregistrement acquis comme les enregistrements de la base de données comprennent des champs de même type qui seront comparés un à un. Par exemple, pour un enregistrement de données d'une personne, il y a un champ « nom-prénom », un champ « adresse postale » et un champ « adresse courriel ».

Le procédé boucle, étape 23, sur les enregistrements de la base de données afin de les comparer les uns après les autres à l'enregistrement acquis.

A l'étape 25, une comparaison d'au moins un champ avec le champ correspondant de l'enregistrement acquis est réalisée. La particularité de cette comparaison est qu'elle ne donne pas un résultat binaire : identique / différent, mais qu'elle se définit une métrique discrète à au moins trois états dont un premier état correspond à l'identité, ou état identique, un deuxième état correspond à des différences mineures et un troisième état correspond à des différences majeures, ce troisième état pouvant être rapproché de l'état « différent » d'une comparaison classique.

Les notions de différences mineures et majeures sont prédéfinies en fonction du résultat recherché et du type de données traitées. Par exemple, sur un champ « nom-prénom », il peut être décidé que l'inversion « prénom-nom » est une différence mineure par rapport à « nom-prénom » mais qu'un prénom différent est une différence majeure.

Le résultat des comparaisons pour chaque champ étant obtenu, un automate fini est parcouru, étape 27. Chaque transition de l'automate fini correspond à au moins un état de la métrique de comparaison d'au moins un champ, l'automate fini ayant au moins deux états finaux : apparié et non apparié. Un exemple d'automate fini est décrit ci-après en relation avec l'appariement de données individuelles d'identification dans un contexte de remise d'une lettre.

Lorsque l'ensemble des enregistrements de la base de données ont été passés en revue, 3 situations sont possibles : aucun enregistrement n'est considéré comme apparié, un seul enregistrement est considéré comme apparié ou une plusieurs enregistrements sont considérés comme appariés, étape 28.

Dans ce troisième cas, une vérification est faite, étape 29, sur l'état de comparaison d'un champ particulier et seuls les enregistrements pour lequel l'état de ce champ correspond à l'état identique sont considérés comme appariés. Par exemple, seuls les enregistrements ayant strictement la même adresse de courriel sont considérés comme appariés.

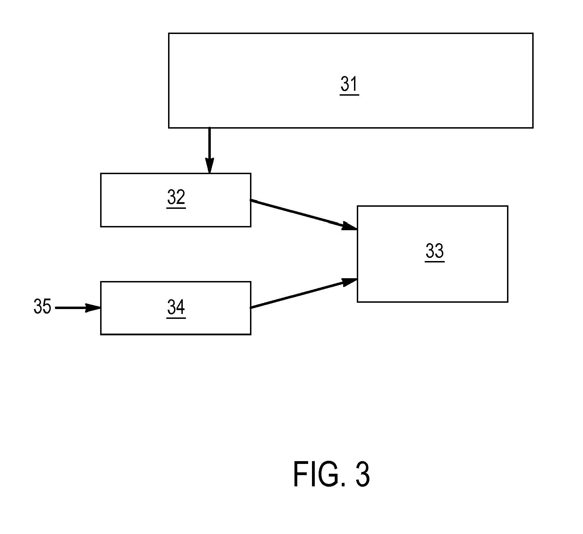

En référence à la figure 3, cette architecture montre un premier composant 31, correspondant à un service d'identification, permettant de faire l'interface entre un utilisateur du service de lettre recommandée électronique et le système mettant en oeuvre le procédé de vérification d'identité du destinataire. Par le biais de cette interface, un utilisateur qui souhaite procéder à l'envoi d'une lettre recommandée électronique fournit au système des données d'identification du destinataire.

Ces données comprennent, par exemple, un nom, une adresse mail, une adresse physique ou tout autre élément de son identité.

Dans un exemple particulier, l'interface est conçue de façon telle que l'utilisateur saisit les données dans des champs prédéterminés. Les données fournies par l'utilisateur sont alors normalisées par le composant 32, qui est un composant de normalisation.

Le principe de ce composant consiste à modifier, si besoin, les données entrées par l'utilisateur, pour les enregistrer sous une forme normalisée permettant d'effectuer les comparaisons ultérieures de manière pertinente.

Ces modifications sont effectuées en utilisant des règles de normalisation prédéterminées, telles que celles indiquées ci-après :
- Les mots qui apparaissent dans une liste d'abréviations sont remplacés par leurs traductions, également enregistrées dans la liste d'abréviations : cette liste est paramétrable par le prestataire du service de vérification d'identité. Elle comprend, par exemple, des termes tels que « Mlle », « Mme », ...
- Les caractères minuscules d'un mot sont convertis en majuscules,
- Tous les accents sont enlevés, et certains caractères avec accents sont remplacés par leurs équivalents sans accents, et
- Les espaces multiples sont enlevés et remplacés par des espaces simples.

A l'issue de la normalisation, les données sont, par exemple, sous la forme d'une liste de champs, tels que définis ci-après :
- un champ « adresse électronique »
- un champ SNA_1 comprenant le prénom et le nom de l'utilisateur,
- des champs SNA_2 à SNA_7 comprenant les différents éléments de l'adresse physique, postale ou géographique de l'utilisateur : « N° appartement », « N° bâtiment », « N° et libellé de la voie », « Lieu-dit ou boite postale », « Code postal », « Localité », « Code pays ».

Dans une réalisation avantageuse de l'invention, les éléments des bases de données avec lesquelles les comparaisons seront effectuées, et qui seront décrites ultérieurement, sont normalisés au préalable en utilisant les mêmes règles de normalisation.

Dans la suite du procédé de vérification d'identité du destinataire, les données sous forme normalisées sont alors fournies à un composant 33 de mise en oeuvre de l'algorithme de décision.

Ce composant 33 consulte, en parallèle, un composant 34 d'accès à une base de données destinataires, afin de rechercher s'il existe une identité numérique correspondant au destinataire.

Selon les réalisations, le composant 34 d'accès à une base de données est apte à consulter lui-même des bases de données externes, ou il est alimenté par des flux de données externes 35.

Une base de données destinataires est, par exemple, alimentée par un système d'Identité Numérique vérifiée de La Poste, appelé « IDN ».

L'IDN est ici présentée en combinaison avec la présente invention, mais il est à noter que le processus de délivrance de l'IDN ainsi que toutes les caractéristiques afférentes, peuvent être mises en oeuvre de manière indépendante de la présente invention et de ses modes de réalisation. Ainsi, le système IDN tel que décrit par la suite permet à un utilisateur IDN de disposer d'une identité numérique vérifiée, qui peut être utilisée à des fins d'identification pour tout type de services.

Dans le cadre d'une réalisation d'un procédé selon l'invention, la vérification d'identité consiste à vérifier si le destinataire éventuel d'une lettre recommandée électronique est un utilisateur IDN, c'est-à-dire un utilisateur ayant, au préalable, effectué son inscription auprès du service d'Identité Numérique vérifiée IDN de La Poste.

Le système IDN va maintenant être décrit de manière indépendante.

Dans un système IDN, les attributs d'un utilisateur IDN concernent, notamment :
- des informations de compte (pseudonyme, mot de passe),
- l'identité de l'utilisateur IDN (civilité, nom, prénom, date de naissance),
- une adresse physique, postale ou géographique (nom rue, code postal, ville, pays, ...)
- une adresse électronique,
- un numéro de téléphone mobile.

Le principe du système IDN est qu'un utilisateur IDN déclare des informations, qui seront vérifiées par le dispositif IDN, et qui pourront ensuite être utilisées sans nécessiter une nouvelle vérification à chaque utilisation.

La mise en oeuvre d'un processus IDN comprend, par exemple, les étapes suivantes :
1. Une étape de début de l'inscription au cours de laquelle un utilisateur IDN déclare, via une interface de type site web IDN, des éléments de son identité (civilité, nom, prénom, date de naissance, adresse e-mail, adresse postale, numéro de téléphone mobile) et d'un mot de passe personnel ;
2. Une d'étape au cours de laquelle le service IDN envoie un message de notification d'inscription à l'adresse électronique déclarée par l'utilisateur IDN ; ce message contient, notamment, un lien url vers une page permettant de confirmer l'inscription et de ce fait l'identifiant IDN de l'utilisateur du service IDN,
3. Une étape au cours de laquelle l'utilisateur IDN confirme l'inscription, par exemple en se rendant sur un site web correspondant au lien fourni dans le message ;
4. Une étape au cours de laquelle le service envoie un code d'activation par SMS au numéro de téléphone mobile déclaré par l'utilisateur IDN ;
5. Une étape au cours de laquelle l'utilisateur IDN saisit, via l'interface, le code SMS reçu, afin que l'existence et la validité du numéro de mobile qu'il a déclaré soient vérifiées et confirmées ;
6. Une étape au cours de laquelle le service envoie, à l'utilisateur IDN, un code d'activation par courrier postal à l'adresse qu'il a déclarée ;
7. Une étape au cours de laquelle le courrier postal, ou tout moyen de délivrance du code d'activation, est remis au domicile, en mains propres, par un employé de La Poste, ou par tout autre moyen permettant de vérifier l'adresse postale du destinataire ainsi que l'identité de l'utilisateur du service IDN;
8. Une étape au cours de laquelle l'utilisateur IDN saisit, via l'interface, le code d'activation reçu par courrier et remis en mains propres, ceci afin de valider l'adresse physique déclarée par l'utilisateur IDN et de confirmer la vérification de l'identité de l'utilisateur IDN qu'il a déclarée;
8. Une étape finale au cours de laquelle le service confirme à l'utilisateur IDN la création de son IDN personnel.

Ainsi, un tel service IDN permet de vérifier une à une l'ensemble, ou un sous-ensemble, des données fournies par l'utilisateur IDN et notamment l'identité qu'il a déclarée.

Les données de l'utilisateur sont stockées de manière sécurisée.

Ces données sont stockées sous une forme normalisée, ainsi que décrit dans le tableau suivant :

| Attribut | Format | Taille (non chiffrée) | Signification | Exemple (non chiffré) |
|---|---|---|---|---|
| id | Int not null auto_increment | 11 | Identification Number : ID technique BDD | 1 |
| login | String not null | varchar(50) | Login de l'utilisateur (son adresse email) | « sdupont@nom ail.fr » |
| password | Empreinte | varchar(100) | Empreinte du mot de passe | |
| pseudo | String not null | varchar(32) | Pseudonyme de l'Utilisateur | « sdt-007 » |
| nom | Chiffré (Base 64) | varchar(50) | Nom de l'utilisateur | « Dupont » |
| prénom | Chiffré (Base 64) | varchar(50) | Prénom de l'utilisateur | « Stéphane » |
| prefix | Chiffré (Base 64) | varchar(10) | Préfixe honorifique du nom du sujet | « M », « MME », « MLLE » |
| naissance_date | Date | | Date de naissance | « 01-04-2000 » |
| sna2 | Chiffré (Base 64) | varchar(38) | Adresse : Appartement, chez ... | |

| | | | |
|---|---|---|---|
| sna3 | Chiffré (Base varchar(38) 64) | Adresse : bâtiment, immeuble | |
| sna4 | Chiffré (Base varchar(38) 64) | Adresse : n° et libellé de la voie | |
| sna5 | Chiffré (Base varchar(38) 64) | Adresse : lieu-dit ou boite postale | « Le Petit-Pont » |
| sna61 | Chiffré (Base varchar(5) 64) | Adresse : code postal | « 35480 » |
| sna62 | Chiffré (Base varchar(38) 64) | Adresse : localité | « Paris » |
| sna7 | Chiffré (Base varchar(2) 64) | Adresse : code pays au format ISO.316631988-alpha2 | « FR » |
| mobile | Chiffré (Base varchar(10) 64) | Numéro de téléphone mobile | « +33123381597 » |
| courriel | Chiffré (Base varchar(50) 64) | Adresse mail de l'utilisateur | « sdupont@nom ail.fr » |
| registration_date | Date not null | Date de création du compte | |
| validation_date | Date | Date de validation du compte | |
| password_date | Date | Date dernier changement du mot de passe | |
| sna_date | Date dans | Date dernier changement les champs sna | |
| mobile_date | Date | Date dernier changement du mobile | |
| courriel_date | Date l'adresse | Date dernier changement de électronique | |

Ainsi que mentionné précédemment, les données enregistrées dans une base de données dans le cadre d'un service IDN peuvent être utilisées par le composant 34.

Dans d'autres réalisations, le composant 34 peut être alimenté via toutes sortes de bases de données fournies par des prestataires extérieurs, tel que des bases de données de certificats entreprise. Dans ce cas par exemple, le composant 34 héberge directement certaines informations des certificats entreprise.

Dans tous les cas, à savoir un hébergement de la base de données directement au niveau du composant 34, ou un hébergement à distance, le composant 33 consulte les données via le composant 34, et utilise ces données pour effectuer des comparaisons avec les données fournies par l'utilisateur du service de lettre recommandée électronique au composant 31, après normalisation par le composant 32.

Ainsi, le composant 33 applique un algorithme mettant en oeuvre une matrice de décision pour déterminer, en fonction des valeurs de différence déterminées, si un ou plusieurs éléments, ou enregistrements, de la base de données utilisateurs correspond(ent) à l'utilisateur, définissant ainsi un appariement entre les données fournies par l'expéditeur et un destinataire quand la correspondance existe.

Une telle matrice de décision prend par exemple, et sans que cette matrice ne soit exhaustive des comparaisons possibles, la forme suivante :

| | | | | | | | | | | | | | |
|---|---|---|---|---|---|---|---|---|---|---|---|---|---|
| Différence email | = | = | = | M | - | - | - | - | - | - | - | - | - |
| Différence SNA1 | = | m | M | * | = | = | = | m | m | m | M | M | M |
| Différence SNA2-7 | * | * | * | * | = | M | - | = | M | - | = | M | - |
| Identification | O | O | N | N | O | N | N | O | N | N | N | N | N |

Le terme « différence email » correspondant à la comparaison entre une adresse email d'un destinataire éventuel, fourni par un utilisateur du service de lettre recommandée électronique, et des adresses email enregistrées dans des bases de données destinataire.

Il en va de même pour les autres paramètres, qui sont comparés un à un : comparaison du nom (différence SNA_1) et comparaison de l'adresse physique (champs SNA_2-7).

Dans la matrice ci-dessus :
- le signe « = » représente une différence nulle,
- le signe « m » représente une différence mineure,
- le signe « M » représente une différence majeure,
- le signe « -» représente une donnée absente,
- le signe « * » indique que la valeur n'a pas d'influence,
- le signe « O » indique que l'élément de la base de données destinataires faisant l'objet de la comparaison correspond effectivement au destinataire, et
- le signe « N » indique que l'élément ne correspond pas.

Ainsi, par exemple, la première colonne de la matrice de décision correspond à la décision suivante :
- la comparaison entre les emails aboutit à une différence nulle,
- la comparaison entre les noms aboutit à une différence nulle,
- par conséquent, quelque soit la valeur des champs d'adresse physique, on détermine que l'élément de la base de données destinataire comparé correspond au destinataire.

La détermination des valeurs de différence est, par exemple, effectuée de la façon suivante :
1- La différence entre les champs email peut être Nulle ou Majeure :
   - si les deux adresses emails sont parfaitement identiques, la différence est « Nulle »
   - si les deux adresses emails sont différentes, la différence est « Majeure »
2- La différence entre les champs SNA_1 peut être Nulle, Mineure ou Majeure :
   - si les éléments contenus dans les deux champs SNA_1 sont parfaitement identiques, la différence est « Nulle »,
   - si les éléments contenus dans les deux champs SNA_1 sont identiques mais dans un ordre différent, ce qui correspondrait à une combinaison « Nom Prénom » et une combinaison « Prénom Nom », la différence est « Mineure »,
   - Si des éléments des champs SNA_1 diffèrent, mais sont présents dans la liste d'abréviations, la différence est « mineure »,
   - Dans les autres cas, la différence est « majeure ».
3- La différence entre les champs SNA_2-7 peut être Nulle, si les champs après normalisation sont identiques, ou Majeure s'ils diffèrent après normalisation.

Ainsi, après application de l'algorithme de décision, le composant 3 détermine si des éléments de la base de données consultée via le composant 4 correspondent aux données fournies par l'utilisateur, et donc au destinataire éventuel de la lettre recommandée électronique.

Enfin,
- dans le cas où l'algorithme détermine un unique élément correspondant au destinataire, on détermine que la vérification est positive,
- dans le cas où l'algorithme ne détermine aucun élément correspondant au destinataire, on détermine que la vérification d'identité est négative,
- dans le cas où l'algorithme de décision détermine une pluralité d'éléments correspondant au destinataire, on détermine que la vérification d'identité est positive si ces éléments ont une adresse électronique identique.

Dans le cas où la vérification d'identité est positive, l'utilisateur de la lettre recommandée électronique peut poursuivre l'envoi au destinataire.

Dans le cas où la vérification d'identité est négative, différentes solutions peuvent être proposées à l'utilisateur du service de la lettre recommandée en ligne.

De manière générale, le procédé décrit est destiné à être mis en oeuvre via un système d'exploitation comprenant des serveurs d'hébergement et des processeurs permettant la mise en oeuvre des différentes étapes du processus.

L'ensemble des ces éléments matériels d'hébergement, de stockage ou d'exploitation sont maintenus par le prestataire du service de la lettre recommandée électronique ou par un autre prestataire de service.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

En particulier, la description précédente a découpée le procédé d'identification en composants de type fonctionnel. Ce découpage est modifiable dans l'implémentation et, en particulier, l'ensemble des composants fonctionnels décrits peuvent être regroupés dans un seul serveur ou, au contraire, être répartis de façon variable entre plusieurs serveurs en fonction de considérations telles que la charge, la sécurité du système, etc. Ces opérations de répartition relèvent des compétences normales des architectes système et des ingénieurs en charge des systèmes informatiques.

De la même façon, ces composants peuvent être dupliqués.

Par exemple, le composant 33 de mise en oeuvre de l'algorithme de décision peut être intégré dans le système IDN afin d'éviter la propagation sur un réseau des données personnelles, et donc confidentielles, contenues dans l'IDN.

Par ailleurs, afin de simplifier la description, la recherche des enregistrements a été présentée sous forme d'une boucle passant en revue tous les enregistrements de la base de données les uns après les autres. On comprend que l'homme du métier peut utiliser les outils d'optimisation des bases de données à sa disposition comme les index pour obtenir des résultats plus rapidement.

Dans les revendications, le mot « comprenant » n'exclut pas d'autres éléments et l'article indéfini « un/une » n'exclut pas une pluralité.

## Revendications

1. Procédé d'appariement de données d'identification comprenant :
• acquisition d'un enregistrement de données comprenant une pluralité de champs ;
• sélection d'enregistrements appariés stockés dans une base de données, les enregistrements de données ayant des champs de type correspondant aux champs de l'enregistrement acquis, la sélection comprenant pour chaque enregistrement de la base de données :
• comparaison d'au moins un champ avec le champ correspondant de l'enregistrement acquis, la comparaison définissant une métrique discrète à au moins trois états dont un premier état correspond à une identité ;
• recherche de l'appariement par parcours d'un automate fini dans lequel chaque transition correspond à au moins un état de la métrique de comparaison d'au moins un champ, l'automate fini ayant au moins deux états finaux : apparié et non apparié.

2. Procédé selon la revendication 1, **caractérisé en ce qu'**il comprend en outre, lorsque plusieurs enregistrements stockés sont définis comme appariés, la vérification que le résultat de la comparaison d'un champ prédéterminé est le premier état.

3. Procédé selon la revendication 1 ou 2, **caractérisé en ce que** la métrique discrète comprend 3 états : outre le premier état correspondant à une identité, un deuxième état correspondant à une différence mineure et un troisième état correspondant à une différence majeure.

4. Procédé selon la revendication 1, 2 ou 3, **caractérisé en ce que** les enregistrements comprennent les champs suivants : un premier paramètre d'identification correspondant à une adresse électronique de la personne, un deuxième paramètre d'identification correspondant au nom de la personne et un troisième paramètre correspondant à une adresse physique de la personne.

5. Procédé selon la revendication 4, **caractérisé en ce que**, en outre, lorsque le résultat de la recherche d'appariement correspond à :
• un unique enregistrement, détermination que l'appariement est positif ;
• aucun enregistrement, détermination que l'appariement est négatif ;
• une pluralité d'enregistrement, détermination que l'appariement est positif si ces enregistrements comprennent une adresse électronique identique.

6. Procédé selon la revendication 4 ou 5, dans lequel les valeurs de la métrique sont comprises
• pour le premier paramètre d'identification, dans le groupe comprenant : premier et deuxième états,
• pour le deuxième paramètre, dans le groupe comprenant : premier, deuxième et troisième états,
• pour le troisième paramètre, dans le groupe comprenant premier et troisième états

7. Procédé selon la revendication 6 dans lequel, lorsqu'un premier paramètre a été fourni, automate fini comprend les étapes suivantes :
• lorsque l'état de la métrique du premier paramètre avec le paramètre correspondant de l'enregistrement est le premier état
• si l'état de la métrique du deuxième paramètre avec le paramètre correspondant de l'enregistrement est le premier état, détermination que l'enregistrement correspond à la personne,
• si l'état de la métrique du deuxième paramètre est le deuxième état, détermination que l'enregistrement correspond au à la personne,
• si l'état de la métrique du deuxième paramètre est le troisième état, détermination que l'enregistrement ne correspond pas à la personne.
• lorsque l'état de la métrique du premier paramètre est le troisième état, détermination que l'enregistrement ne correspond pas à la personne.

8. Procédé selon la revendication 6 dans lequel, lorsqu'un premier paramètre n'a pas été fourni, l'algorithme de décision comprend les étapes suivantes :
• détermination qu'un enregistrement de la base de données correspond à la personne dans les deux cas suivants : un premier ou deuxième état pour le deuxième paramètre et un premier état pour le troisième paramètre,
• détermination qu'aucun enregistrement ne correspond dans tous les autres cas.

9. Procédé selon l'une des revendications précédentes, comprenant l'étape, avant l'étape de comparaison, de normalisation des données acquises selon un format prédéterminé.

10. Procédé de vérification de l'identité d'un destinataire d'un courrier recommandé électronique, **caractérisé en ce qu'**il comprend un sous-procédé d'appariement selon l'une quelconque des revendications précédentes des données décrivant le destinataire du courrier.

11. Procédé selon la revendication 10, **caractérisé en ce que** l'appariement est réalisé avec les enregistrements d'une base de données de destinataires, lesdits enregistrements ayant été préalablement validés comme des valeurs d'authentification, de sorte à déterminer si les données décrivant le destinataire correspondent, ou non, à un destinataire authentifié.
